Europäisches Patentamt

European Patent Office

Office européen des brevets

(11) Publication number: **0 148 350**
**B1**

(12) **EUROPEAN PATENT SPECIFICATION**

(45) Date of publication of patent specification: **25.01.89**

(51) Int. Cl.⁴: **F 21 S 5/00, G 02 B 6/00**

(21) Application number: **84113146.9**

(22) Date of filing: **31.10.84**

(54) A light radiation system.

(30) Priority: **10.11.83 JP 211642/83**

(43) Date of publication of application:
**17.07.85 Bulletin 85/29**

(45) Publication of the grant of the patent:
**25.01.89 Bulletin 89/04**

(84) Designated Contracting States:
**CH DE FR GB IT LI NL SE**

(56) References cited:
**DE-A-1 929 739**
**DE-A-2 713 737**
**DE-U-1 918 909**
**US-A-2 290 278**
**US-A-2 604 005**
**US-A-4 380 043**

(73) Proprietor: **Mori, Kei**
**3-16-3-501, Kaminoge**
**Setagaya-ku Tokyo (JP)**

(72) Inventor: **Mori, Kei**
**3-16-3-501, Kaminoge**
**Setagaya-ku Tokyo (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

The present invention relates to a light radiating device in accordance with the generic clause of claim 1.

The present applicant has previously proposed various methods and apparatus in which solar rays are focused by a lens or the like, guided into an optical conductor cable and then transmitted onto an optional desired place for use in illumination or for other purposes. Furthermore, the present applicant has also proposed various methods and apparatus in which solar rays, or the natural rays in other words, transmitted in such a manner as described above, are employed as a light source for light composition (photosynthesis) for creating chlorella, etc. or as a light source for use in cultivating plants under the ground or in a room.

However, in the case of solar rays transmitted in such a manner as mentioned above which are employed as the light source for use in cultivating plants, it is desirable that the light rays from the light source be projected effectively and in a wide range because of the light composition reaction (photosynthesis). It has already been proposed that the direction of the projected light is changed with the lapse of time.

From US—A 2 290 278 an illuminated indicating device in the form of a clock, or the like, is known. The device comprises a dial having indicia on the front face thereof and an indicating hand, mounted to rotate over the dial. The hand being formed so as to conduct light therethrough and to emit light rays from its outer end onto the indicia of the dial. At the rear of the dial a light source is mounted. A light conducting member leads the light from the light source to the inner end of the hand. The invention is directed to a light radiation system for cultivating plants and it is the object of the invention to provide a light radiation system of this type for transmitting light through an optical conductor cable and which allows to effectively cultivate plants.

This task is solved with a light radiation system having the features of claim 1.

Preferred embodiments of the invention are claimed in the depending claims.

The features and advantages of the invention will now be described in more detail with reference to the drawings.

Figs. 1 through 4 are views of illustrating the embodiments of the invention.

Fig. 5 is a view showing an example in the case of actualizing the embodiments shown in Figs. 3 and 4.

Description of the preferred embodiments

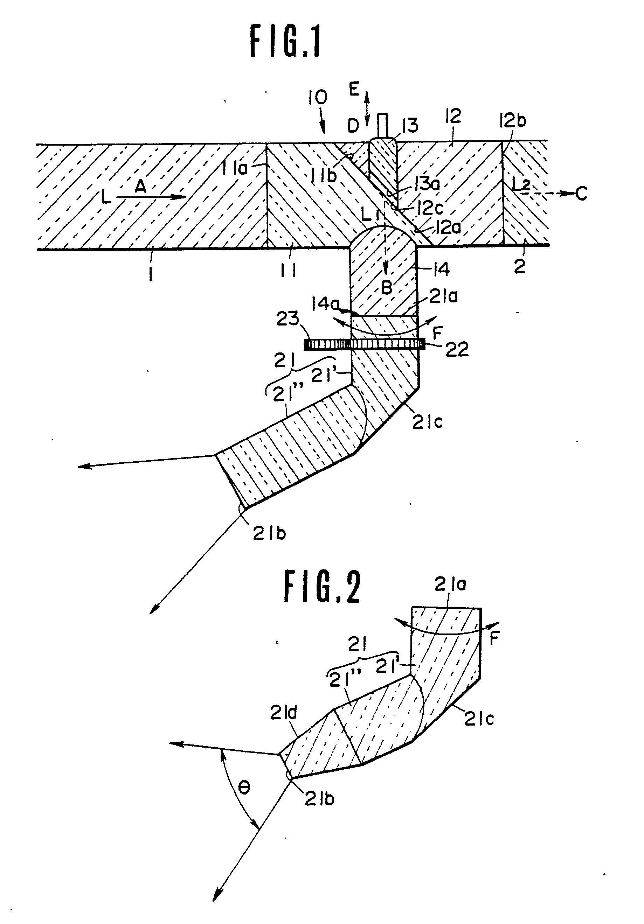

Fig. 1 is a view of an embodiment of the present invention. In Fig. 1, 1 and 2 represent a first and a second optical conductor rod, aligned along a fixed optical axis, and 10 is an optical T-coupler.

The optical T-coupler, in the following named as light diverting and switching device 10, consists of a first transparent cylindrical member 11 having one surface 11a perpendicular to the first optical axis to be connected with the first optical conductor rod 1 and another surface 11b inclined to said first optical axis, a second transparent cylindrical member 12 having one surface 12a inclined to said first optical axis to be connected with the inclined surface 11b of the first cylindrical member 11 and another surface 12b perpendicular to said first optical axis to be connected with the optical conductor rod 2 at a light-emitting side thereof and further having a circular hole 12c elongated toward the inclined surface 12a. A third transparent cylindrical member 13 for use in the light-switching is movably installed in the hole 12c of the second cylindrical member 12, the edge surface 13a of which has a similar inclined surface as the afore-mentioned inclined surfaces, and a branch member 14 to be connected with the first cylindrical member 11, said branch member having a second optical axis perpendicularly to said first optical axis. The present applicant has already proposed such a light diverting and switching device 10.

In the case when the light L is transmitted through the first optical conductor rod 1 in a direction shown by arrow A, the inclined surface 13a of the cylindrical member 13 for use in light-switching is separated from the inclined surface 11b of the first cylindrical member 11, the light L is reflected at a portion of the cylindrical member 11 opposite to the inclined surface 13a of the cylindrical member 13 and the light L further propagates in a direction shown by arrow B. On the other hand, in the case that the inclined surface 13a, of the cylindrical member 13, for use in the light-switching, comes into contact with the inclined surface 11b of the cylindrical member 11, the light L propagates through those contact-portions in a direction shown by arrow C. By displacing the cylindrical member 13 for use in light-switching in a direction shown by arrow D or in a direction shown by arrow E, a part of the light L transmitted from the direction shown by arrow A can be switched to the direction shown by arrow B or the direction shown by arrow C.

The light $L_1$ diverted in direction B is radiated by the light radiation system according to the present invention as described hereinafter for use in illumination or for other purposes. A part of the light $L_2$ propagating in the direction of C is diverted and taken out by the light switching device as mentioned before. Similar light switching devices may be connected in cascade.

In Fig. 1, the optical conductor rod 21 is comprised of a first linear light conducting part 21' having a light-receiving surface 21a adjacent to and extending parallel with the end surface 14a of said branch member 14. A second linear light conducting part is 21" connected in an inclined relationship to the side surface of the linear part 21'. At the connecting junction between the linear part 21' and the linear part 21" a cutout portion on the inclined surface 21c is provided. The light rays propagating through the linear part 21' are reflected on an inclined light reflecting surface 21c and transmitted to the linear part 21″. Next, the light rays propagate through the linear part 21″ and are radiated outside from the light-radiating end surface 21b.

When the linear part 21′ is rotated by the rotating mechanism for instance, gear mechanisms 22 and 23, and a motor not shown in Fig. 1 for rotating them, in a direction shown by arrow F, the direction of the light emitted from the light-radiating end surface 21b varies in accordance with the rotation thereof. In such a manner, it may be possible to illuminate a wide area. In order to effectively perform light composition (photosynthesis) for plants, the light rays must be moved so as to illuminate uniformly and not make any shadows. In respect to the light radiating system according to the present invention, the projecting direction of the light rays is changed so that there is no shadow at any time. In such a manner, the light composition reaction can be effective. It follows that the light rays can be applied within a wide area and, for this reason, it may be possible to improve the efficiency of light ray utilization.

The present applicant has previously proposed various methods and apparatus in which the solar rays are focused by a lens or the like and guided into an optical conductor rod and further transmitted through it onto an optional desired place for use in illumination and for other purposes. In the case of using the solar rays transmitted through the optical conductor rod as a light source for optical composition of plants under the ground or in a room, the afore-mentioned light projector, according to the present invention, is employed so that the solar rays can be most effectively utilized.

Needless to say, it would seem normal that plants can be cultivated only by means of solar rays. The solar ray collecting device and the optical conductor rod are very expensive. If the solar rays transmitted in such a manner are used in combination with light rays from an artificial light source equipped in an underground room or any room for that matter, so that the light rays are applied to the plants to the necessary extent for maintaining the life of the plants by adding artificial light rays to solar rays, it may be possible to cultivate plants more economically and more efficiently.

Fig. 2 is a view showing the main portion of the light projector of another embodiment according to the present invention. In Fig. 2, the reference numeral the same as that of Fig. 1, is attached to the part performing the same function as in Fig. 1. Furthermore, in the embodiment, the light-emitting end portion of the conductor part 21″ in the light, is formed in a tapered form 21d so as to decrease the diameter thereof toward the light-emitting end surface 21b. The opening exit-angle of the light rays propagated through the optical conductor part 21″ is increased at this tapered portion and the light emitting angle of the light rays discharged from the light-radiating end 21b is also increased so that a wide range of illumination can be possible compared with the light projector shown in Fig. 1.

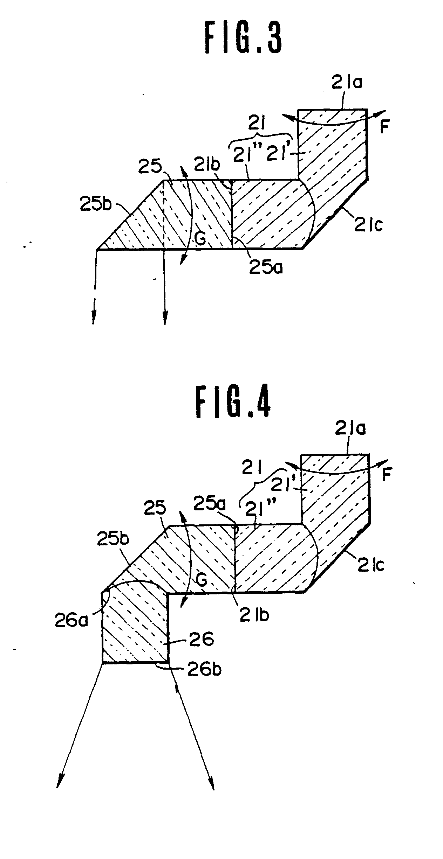

Fig. 3 is a view showing the main portion of still another embodiment according to the present invention. In Fig. 3, a third optical conductor part 25 is provided having a light-receiving edge-surface 25a opposed to the light-radiating end-surface 21b of the conductor part 21″, as mentioned above, and a reflection edge-surface 25b formed on an inclined plane, is installed at the light-radiating end surface side of the optical conductor part 21″. The third conductor part 25 is movable in the direction shown arrow G. In such a construction, the light rays from the optical conductor rod 21 are transmitted into the optical conductor part 25 and reflected on the inclined surface 25b thereof. The light rays are emitted outside from the optical conductor part 25. On that occasion, when the inclined surface 25b of the optical conductor part 25 is in the state shown in Fig. 3, namely, the inclined surface 25b is situated at the upward position, the light rays are emitted downward. On the contrary, when the inclined surface 25b is situated at the downward position, the light rays are emitted upward. In other words, the light rays are emitted in the opposite direction to the position of the inclined surface.

Consequently, if the optical conductor part is rotatable in the direction as shown by arrow G, the direction of the light's emission can be optionally changed to down, level, and upward positions respectively. For instance, in the case of employing the light projector, according to the present invention, as the light source for cultivating plants, the light rays are radiated from the upper side of it toward small plants as shown in Fig. 3. Depending on the size of the plants, the radiation angle is gradually adjusted. If the light rays are radiated obliquely from the upper side, it may be possible to supply light rays even to the leaves at the lower side of plants.

Fig. 4 is a view showing the main portion of still another embodiment according to the present invention. In Fig. 4, one edge 26a of a fourth optical conductor part 26 is firmly attached by adhesive to a location opposite to the inclined surface 25b of the third optical conductor part 25, i.e. the light-emitting portion of the embodiment as shown in Fig. 3. By use of such a construction, the light rays reflected on the inclined surface 25b are guided into the optical conductor part 26 and emitted from the light-emitting edge-surface 26b of the optical conductor part 26 in order to make the direction of the radiation uniform. Furthermore, in this embodiment, the light-emitting edge-side may be formed in a tapered condition so as to decrease the diameter toward the light-emitting end 26b as shown in Fig. 2. It may be easily understood that the radiation angle of the light rays can be changed so as to increase it.

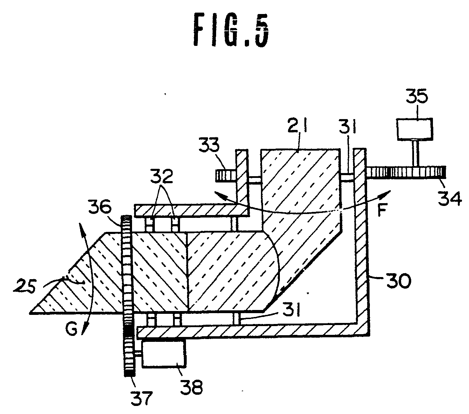

Fig. 5 is a view showing an example of the case of actualizing the embodiments shown in Figs. 3 and 4. In Fig. 5, 30 is a housing for accommodating the first, second and third parts optical conductor 21', 21" and 25 mentioned above 31 is a supporting spacer for supporting the optical conductor part 21' in the housing 30, 32 is a bearing for rotatably supporting the optical conductor part 25 in the housing 30, 33 and 34 gears for rotating the housing 30, 35 is a motor for applying the rotating force to those gears, 36 and 37 are gears for rotating the optical conductor part 26, and 38 is a motor for applying the rotating force to those gears.

The housing 30 is rotated by the motor 35 in a direction shown by arrow F and the optical conductor part 25 is rotated by the motor 38 in a direction shown by arrow G. In such a manner, the embodiments shown in Figs. 3 and 4 are intended to be actualized.

However, in the case of employing the light projector according to the present invention for cultivating plants, there is no need to illuminate the ceiling. Therefore, it may be possible that the light-emitting edge portion or the optical conductor rod 26 be rotated from the downward direction to an approximate horizontal direction, entirely within the range of the angle of about 180°. Consequently it may be possible to control or construct the motor 38 or the gears 36 and 37 in such a manner as described heretofore.

As is apparent from the foregoing description, according to the present invention, the solar rays transmitted through the optical conductor cable can be effectively utilized for cultivating plants.

## Claims

1. Light radiation system for cultivating plants comprising:

a first optical conductor rod (1) and a second optical conductor rod (2), said optical conductor rods being actually aligned along a first optical axes to transmit light therethrough;

an optical T-coupler (10), provided between said conductor rods (1, 2) and having a branch member (14) with a second optical axes perpendicular to said first optical axes, said branch member ending in an end surface (14a) perpendicular to said second optical axes, means (11b, 12a, 13, 13a) for diverting light propagating along the first optical axes into said branch member,

a light projector (21) having at least a first and a second linear light conducting part (21', 21"), said first part (21') comprising a light receiving surface (21a) adjacent to and extending parallel with said end surface (14a), a third optical axes aligned with said second optical axes and a light reflecting surface (21c) inclined to said third optical axes and with a rotating mechanism (22, 23) engaging said projector (21) at said first part (21') for rotating said projector around said third optical axes,

said second part (21") being connected with one end to the side surface of said first part (21') and comprising a fourth optical axes inclined to said third optical axes and a light radiating end surface (21b) perpendicular to said fourth optical axes.

2. Light radiation system in accordance with claim 1, wherein said second part (21") of said light projector has a tapered portion (21d) which decreases in diameter as the light radiating end surface (21b) is approached.

3. Light radiation system in accordance with claim 1, wherein said light projector comprises a third part (25), actually aligned with the second part (21) and being rotatable about the fourth optical axes.

4. Light radiation system in accordance with claim 3, wherein a fourth part (26) being connected to a side surface of said third part (25), the optical axes of said fourth part being perpendicular to the optical axes of said third part.

5. Light radiation system in accordance with claim 3 or 4, wherein the first, the second and the third parts (21', 21", 25) are installed in a housing (30) said housing being rotatable about said third optical axes and carrying a rotating mechanism (36, 37, 38) for rotating said third part (25) about the fourth optical axes.

## Patentansprüche

1. Lichtabstrahlungssystem zum Kultivieren von Pflanzen mit:

einem ersten optischen Leiterstab (1) und einem zweiten optischen Leiterstab (2), welche genannten optischen Leiterstäbe tatsächlich entlang einer ersten optischen Achse zum Hindurchleiten von Licht ausgerichtet sind;

einer optischen T-Kupplung (10), die zwischen den genannten Leiterstäben (1, 2) vorgesehen ist und ein Abzweigelement (14) mit einer zur genannten ersten optischen Achse senkrechten zweiten optischen Achse aufweist, wobei das genannte Abzweigelement in einer zur genannten zweiten optischen Achse senkrechten Stirnfläche (14a) endet, einer Einrichtung (11b, 12a, 13, 13a) zum Ablenken von sich entlang der ersten optischen Achse fortpflanzendem Licht hinein in das genannte Abzweigelement,

einem Lichtprojektor (21) mit wenigstens einem ersten und einem zweiten linearen lichtleitendem Teil (21', 21"), wobei der genannte erste Teil (21') ein an die genannte Stirnfläche (14a) angrenzende und parallel zu dieser verlaufende Lichtempfangsfläche (21a), eine mit der genannten zweiten optischen Achse fluchtende dritte optische Achse und eine zur genannten dritten optischen Achse schrägverlaufende Lichtreflexionsfläche (21c) aufweist, und mit einem an den genannten Projektor (21) am genannten ersten Tile (21') angreifenden rotierenden Mechanismus (22, 23) zum Drehen des genannten Projektors um die genannte dritte optische Achse,

wobei der genannte zweite Teil (21") sich mit einem Ende an die Seitenfläche des genannten ersten Teils (21') anschließt und eine zur genannten dritten optischen Achse schrägverlaufende vierte optische Achse und eine zur genannten vierten optischen Achse senkrechte lichtabstrahlende Stirnfläche (21b) aufweist.

2. Lichtabstrahlungssystem nach Anspruch 1, in welchem der genannte zweite Teil (21") des genannten Lichtprojektors einen sich verjüngenden Abschnitt (21d) aufweist, der sich im Durchmesser mit Annäherung an die lichtabstrahlende Stirnfläche (21b) verringert.

3. Lichtabstrahlungssystem nach Anspruch 1, in welchem der genannte Lichtprojektor einen dritten Teil (25) umfaßt, der tatsächlich mit dem zweiten Teil (21) fluchtet und um die vierte optische Achse drehbar ist.

4. Lichtabstrahlungssystem nach Anspruch 3, in welchem ein vierter Teil (26) sich an eine Seitenfläche des genannten dritten Teils (25) anschließt, wobei die optische Achse des genannten vierten Teils senkrecht zur optischen Achse des genannten dritten Teils verläuft.

5. Lichtabstrahlungssystem nach Anspruch 3 oder 4, in welchem der erste, der zweite und der dritte Teil (21', 21", 25) in einem Gehäuse (30) angeordnet sind, wobei das genannte Gehäuse um die genannte dritte optische Achse drehbar ist und einen rotierenden Mechanismus (36, 37, 38) zum Drehen des genannten dritten Teils (25) um die vierte optische Achse trägt.

**Revendications**

1. Système de rayonnement de lumière pour une culture de plantes, comprenant:

une première tige formant conducteur optique (1) et une seconde tige formant conducteur optique (2), lesdites tiges formant conducteurs optiques étant effectivement alignées le long d'un premier axe optique afin de transmettre de la lumière dans cette direction;

un coupleur optique en T (10) disposé entre lesdites tiges conductrices (1, 2) et comportant un élément de dérivation (14) présentant un second axe optique perpendiculaire audit premier axe optique, ledit élément de dérivation se terminant dans une surface extrême (14a) perpendiculaire audit second axe optique, et les moyens (11b, 12a, 13, 13a) pour dériver de la lumière se propageant le long du premier axe optique jusque dans ledit élément de dérivation;

un projecteur de lumière (21) comportant au moins une première et une seconde partie linéaire de conduction de lumière (21', 21"), ladite première partie (21') comprenant une surface réceptrice de lumière (21a) adjacente et parallèle à ladite surface extrême (14a), un troisième axe optique aligné avec ledit second axe optique et une surface de réflexion de lumière (21c) inclinée par rapport audit troisième axe optique, ainsi qu'un mécanisme d'entraînement en rotation (22, 23) sollicitant ledit projecteur (21) dans ladite première partie (21') pour faire tourner ledit projecteur autour dudit troisième axe optique, ladite seconde partie (21") étant reliée par une extrémité avec la surface latérale de ladite première partie (21') et comprenant un quatrième axe optique qui est incliné par rapport audit troisième axe optique et une surface extrême de rayonnement de lumière (21b) qui est perpendiculaire audit quatrième axe optique.

2. Système de rayonnement de lumière selon la revendication 1, dans lequel ladite seconde partie (21") dudit projecteur de lumière comporte une partie effilée (21d) qui diminue de diamètre à mesure qu'on se rapproche de la surface extrême de rayonnement de lumière (21b).

3. Système de rayonnement de lumière selon la revendication 1, dans lequel ledit projecteur de lumière comprend une troisième partie (25), effectivement alignée avec la seconde partie (21) et pouvant tourner autour du quatrième axe optique.

4. Système de rayonnement de lumière selon la revendication 3, dans lequel une quatrième partie (26) est reliée à une surface latérale de ladite troisième partie (25), l'axe optique de ladite quatrième partie étant perpendiculaire à l'axe optique de ladite troisième partie.

5. Système de rayonnement de lumière selon la revendication 3 ou 4, dans lequel la première, la seconde et la troisième partie (21', 21", 25) sont installées dans un carter (30), pouvant être entraîné en rotation autour dudit troisième axe optique et portant un mécanisme d'entraînement en rotation (36, 37, 38) servant à faire tourner ladite troisième partie (25) autour du quatrième axe optique.

# FIG.1

# FIG.2

# FIG.3

# FIG.4

# FIG.5